# EUROPEAN PATENT APPLICATION

(11) **EP 4 566 710 A1**
(43) Date of publication of application: **11.06.2025**
(21) Application number: 23849848.9
(22) Date of filing: 11.07.2023
(51) Int. Cl.: B01J 29/80, B01D 53/94, F01N 3/021, F01N 3/08, F01N 3/10, F01N 3/24, F01N 3/28

(54) **SELECTIVE CATALYTIC REDUCTION SYSTEM FOR EXHAUST GAS TREATMENT, AND EXHAUST GAS PURIFICATION DEVICE FOR LEAN-BURN ENGINE USING SAME**

(30) Priority: 04.08.2022 JP 2022124488
(71) Applicant: N.E. Chemcat Corporation, Tokyo 105-6124 (JP)
(72) Inventor: KUMAMOTO, Kazunori, Tokyo 105-6124 (JP); HIHARA, Takashi, Tokyo 105-6124 (JP)
(74) Representative: TBK
(86) International application number: PCT/JP2023/025624
(87) International publication number: WO 2024/029289

(57) **Abstract**

The present disclosure provides a selective catalytic reduction system for exhaust gas treatment which enables achievement of further improved NOₓ and N₂O removal performance, an exhaust gas purification apparatus for lean combustion engines comprising the selective catalytic reduction system for exhaust gas treatment, and the like. A selective catalytic reduction system 100 for exhaust gas treatment according to the present disclosure comprises one or more catalyst carriers 10, and a plurality of catalyst regions A provided on the catalyst carrier, the catalyst region A comprises at least a first catalyst region A1 containing iron-supported zeolite, a second catalyst region A2 containing iron-supported zeolite, and a third catalyst region A3 containing copper-supported zeolite, in this order from the upstream side of an exhaust gas flow channel, the iron-supported zeolite contains zeolite having one or more skeletal structures selected from the group consisting of BEA, CHA, FAU, MOR, MFI and FER, and the copper-supported zeolite contains zeolite having one or more skeletal structures selected from the group consisting of CHA, AEI, AFX and AFT.

## Description

### Technical Field

The present disclosure relates to a selective catalytic reduction system for exhaust gas treatment, an exhaust gas purification apparatus for lean combustion engines comprising the selective catalytic reduction system for exhaust gas treatment, and the like.

### Background Art

Regarding techniques for purifying an exhaust gas generated from an internal-combustion engine such as a lean combustion engine, many proposals have been heretofore made. For example, exhaust gas purification apparatuses are widely known in which a diesel oxidation catalyst (DOC) for purifying harmful components in the exhaust gas, such as carbon monoxide (CO), hydrogen carbide (HC) and nitrogen oxide (NOx), a diesel particulate filter (DPF) for collecting particulate matters (PMs) contained in the exhaust gas, such as soot, and the like are arranged in an exhaust gas flow channel. Further, in recent years, a catalyst-coated DPF in which a catalyst layer is provided by coating a DPF with a catalyst slurry and firing the catalyst slurry for suppressing discharge of particulate matters and removing CO/HC/NOₓ etc., at the same time, and the like have been proposed from the viewpoint of saving the mounting space, etc.

A urea SCR (selective catalytic reduction) system obtained using urea has been developed as a catalyst which performs purification by selectively reducing nitrogen oxide (NOₓ) contained in an exhaust gas generated from a lean combustion engine. In the urea SCR system, a SCR catalyst that adsorbs ammonia generated by hydrolysis of urea is employed. As a SCR catalyst which is used in a urea SCR system, zeolite supporting a transition metal such as iron or copper (transition metal-supported zeolite) is widely used in a urea SCR system because relatively high NOₓ removal performance is easily obtained. In the urea SCR system, NOₓ is chemically reacted with ammonia on the SCR catalyst to convert NOₓ into nitrogen and water. In the urea SCR catalyst, NOₓ is ultimately reduced to N₂ mainly in accordance with the reaction formulae [1] to [3] shown below.

4NO + 4NH₃ + O₂ → 4N₂ + 6H₂O ... (1)

6NO₂ + 8NH₃ → 7N₂ + 12H₂O ... (2)

NO + NO₂ + 2NH₃ → 2N₂ + 3H₂O ... (3)

Meanwhile, in the upcoming European Control Euro 7, VII which will be enforced in European Union (EU), a regulatory value is established for dinitrogen monoxide (N₂O), a greenhouse effect gas, in line with the tightening of fuel consumption/emissions control in recent years. N₂O may be generated as a byproduct of the urea SCR reaction.

As a SCR system directed to N₂O emissions, for example, Patent Literature 1 discloses a system for treating an exhaust gas comprising a first SCR catalyst zone containing iron-supported zeolite having iron supported on a middle-pore-size or large-pore-size molecular sieve such as BEA, and a second SCR catalyst zone containing copper-supported zeolite having copper supported on a small-pore-size molecular sieve such as CHA, wherein with respect to an exhaust gas flow, the first SCR catalyst zone having a specific catalytic capacity is arranged upstream of the second SCR catalyst zone having a specific catalytic capacity.

### Citation List

### Patent Literature

Patent Literature 1: Japanese Translation of PCT International Application Publication No. 2017-531118

### Summary of Invention

### Technical Problem

Vehicle emissions control has increasingly tightened in recent years, and accordingly, further improvement of the purification performance of exhaust gas purification catalysts has been required. It is expected that generation of undesirable N₂O is considerably reduced while high N₂ selectivity as a whole in a SCR reaction is maintained, but in practice, the total emissions of NOₓ and N₂O are not sufficiently reduced by the method of Patent Literature 1.

The present disclosure has been made in view of the above-described problems. That is, an object of the present disclosure is to provide a selective catalytic reduction system for exhaust gas treatment which enables achievement of further improved NOₓ and N₂O removal performance, an exhaust gas purification apparatus for lean combustion engines comprising the selective catalytic reduction system for exhaust gas treatment, and the like.

### Solution to Problem

The present inventors have extensively conducted studies for solving the above-described problems. As a result, it has been found that the above-described problems can be solved by arranging first to third catalyst regions each containing predetermined transition metal-supported zeolite, in a predetermined order, leading to completion of a selective catalytic reduction system for exhaust gas treatment according to the present disclosure.

That is, the present disclosure provides various specific aspects shown below.
(1) A selective catalytic reduction system for exhaust gas treatment that is arranged in an exhaust gas flow channel and purifies an exhaust gas passing through the exhaust gas flow channel, the selective catalytic reduction system comprising:
   one or more catalyst carriers; and a plurality of catalyst regions provided on the catalyst carrier,
   wherein the catalyst region comprises at least a first catalyst region containing iron-supported zeolite and arranged on the upstream side of the exhaust gas flow channel, a second catalyst region containing iron-supported zeolite and arranged on the downstream side of the exhaust gas flow channel with respect to the first catalyst region, and a third catalyst region containing copper-supported zeolite and arranged on the downstream side of the exhaust gas flow channel with respect to the second catalyst region,
   the iron-supported zeolite contains zeolite having one or more skeletal structures selected from the group consisting of BEA, CHA, FAU, MOR, MFI and FER, and iron supported on the zeolite, and
   the copper-supported zeolite contains zeolite having one or more skeletal structures selected from the group consisting of CHA, AEI, AFX and AFT, and copper supported on the zeolite.
(2) The selective catalytic reduction system for exhaust gas treatment according to (1),
   wherein the first catalyst region contains iron-supported BEA type zeolite,
   the second catalyst region contains iron-supported CHA type zeolite, and
   the third catalyst region contains copper-supported CHA type zeolite.
(3) The selective catalytic reduction system for exhaust gas treatment according to (1) or (2),
   wherein the amount of the first catalyst region supported is 10 g/L or more in terms of zeolite per L of the catalyst carrier,
   the amount of the second catalyst region supported is 10 g/L or more in terms of zeolite per L of the catalyst carrier, and
   the amount of the third catalyst region supported is 10 g/L or more in terms of zeolite per L of the catalyst carrier.
(4) The selective catalytic reduction system for exhaust gas treatment according to any one of (1) to (3),
   wherein when the total length of the first catalyst region, the second catalyst region and the third catalyst region supported is defined as 100, ratios of the lengths of the catalyst regions supported satisfy the following relationship:
   the length of the first catalyst region supported is 5 to 40,
   the length of the second catalyst region supported is 5 to 40, and
   the length of the third catalyst region supported is 50 to 90.
(5) The selective catalytic reduction system for exhaust gas treatment according to any one of (1) to (4),
   wherein the catalyst carrier comprises a first catalyst carrier, and
   the first catalyst region, the second catalyst region and the third catalyst region are provided on the first catalyst carrier.
(6) The selective catalytic reduction system for exhaust gas treatment according to any one of (1) to (4),
   wherein the catalyst carrier comprises a first catalyst carrier and a second catalyst carrier,
   the first catalyst region and the second catalyst region are provided on the first catalyst carrier, and
   the third catalyst region is provided on the second catalyst carrier.
(7) The selective catalytic reduction system for exhaust gas treatment according to any one of (1) to (4),
   wherein the catalyst carrier comprises a first catalyst carrier and a second catalyst carrier,
   the first catalyst region is provided on the first catalyst carrier, and
   the second catalyst region and the third catalyst region are provided on the second catalyst carrier.
(8) The selective catalytic reduction system for exhaust gas treatment according to any one of (1) to (4),
   wherein the catalyst carrier comprises a first catalyst carrier, a second catalyst carrier and a third catalyst carrier,
   the first catalyst region is provided on the first catalyst carrier,
   the second catalyst region is provided on the second catalyst carrier, and
   the third catalyst region is provided on the third catalyst carrier.
(9) The selective catalytic reduction system for exhaust gas treatment according to any one of (1) to (8), wherein the catalyst carrier is a flow-through type honeycomb structure.
(10) The selective catalytic reduction system for exhaust gas treatment according to any one of (1) to (9), wherein the exhaust gas flow channel is an exhaust gas flow channel of a diesel engine.
(11) An exhaust gas purification apparatus for lean combustion engines, comprising at least:
   one or more oxidation catalysts that are arranged in an exhaust gas flow channel and that oxidize at least one selected from the group consisting of CO, HC, NO and NH₃ in an exhaust gas discharged from a lean combustion engine;
   a catalyst-coated particulate filter that is arranged in the exhaust gas flow channel and that collects particulate components in the exhaust gas, and combusts or oxidizes and removes the particulate components;
   a reducing agent supplying unit that supplies one or more reducing agents selected from the group consisting of a urea component and an ammonia component into the exhaust gas flow channel; and
   the selective catalytic reduction system for exhaust gas treatment according to any one of (1) to (10) that is arranged in the exhaust gas flow channel and that adsorbs ammonia and brings the ammonia into contact with NOₓ to perform reduction.

### Advantageous Effect of Invention

According to the present disclosure, it is possible to provide a selective catalytic reduction system for exhaust gas treatment which enables achievement of further improved NOₓ and N₂O removal performance, an exhaust gas purification apparatus for lean combustion engines comprising the selective catalytic reduction system for exhaust gas treatment, and the like.

### Brief Description of Drawings

[Figure 1] Figure 1 is a general schematic view showing a selective catalytic reduction system 100 for exhaust gas treatment.
[Figure 2] Figure 2 is a general schematic view showing an exhaust gas purification apparatus 1 for lean combustion engines.
[Figure 3] Figure 3 is a general schematic view showing a selective catalytic reduction system 200 for exhaust gas treatment.
[Figure 4] Figure 4 is a general schematic view showing a selective catalytic reduction system 300 for exhaust gas treatment.
[Figure 5] Figure 5 is a general schematic view showing a selective catalytic reduction system 400 for exhaust gas treatment.
[Figure 6] Figure 6 is a general schematic view showing a selective catalytic reduction system 500 for exhaust gas treatment.
[Figure 7] Figure 7 is a general schematic view showing a selective catalytic reduction system 600 for exhaust gas treatment.
[Figure 8] Figure 8 is a general schematic view showing a selective catalytic reduction system 700 for exhaust gas treatment.
[Figure 9] Figure 9 is a graph showing NOₓ and N₂O removal performance of selective catalytic reduction systems of Example and Comparative Examples.

### Description of Embodiments

Hereinafter, an embodiment of the present disclosure will be described in detail with reference to the drawings. It is to be noted that the following embodiment is illustrative for explaining the present disclosure, and the present disclosure is not limited thereto. That is, the selective catalytic reduction system for exhaust gas treatment according to the present disclosure can be implemented with any change made without departing the sprit thereof. In the present description, relative positions such as the upper, the lower, the left and the right are based on the relative positions shown in the drawings unless otherwise specified. The dimensional ratios in the drawings are not limited to the dimensional ratios shown in the drawings. Meanwhile, in the present description, the expression "to" sandwiched between the preceding and following numerical values or property values is used in the sense of including the preceding and following values. For example, the representation of the numerical range of "1 to 100" includes both the lower limit value "1" and the upper limit value "100". The same applies to the representations of other numerical ranges.

Here, in the present description, the term "average particle diameter D₅₀" refers to a particle diameter at which the integrated value at smaller particle diameters reach 50% of the total in a cumulative distribution of particle diameters on a volume basis. The "average particle diameter D₅₀" means a so-called median diameter, which is a value obtained by performing measurement with a laser diffraction particle diameter distribution measuring apparatus (e.g. Laser Diffraction Particle Diameter Distribution Measuring Apparatus SALD-3100 manufactured by Shimadzu Corporation). The "average particle diameter D₉₀" refers to a particle diameter at which the integrated value at smaller particle diameters reaches 90% of the total in a cumulative distribution of particle diameters on a volume basis.

In the present description, the term "BET specific surface area" is a value determined by a BET one-point method using a specific surface area/pore distribution measuring apparatus (product name: BELSORP-minill manufactured by MicrotracBell Corp.) and analysis software (product name: BEL_Master manufactured by MicrotracBell Corp.).

### (First Embodiment)

### [Selective Catalytic Reduction SCR]

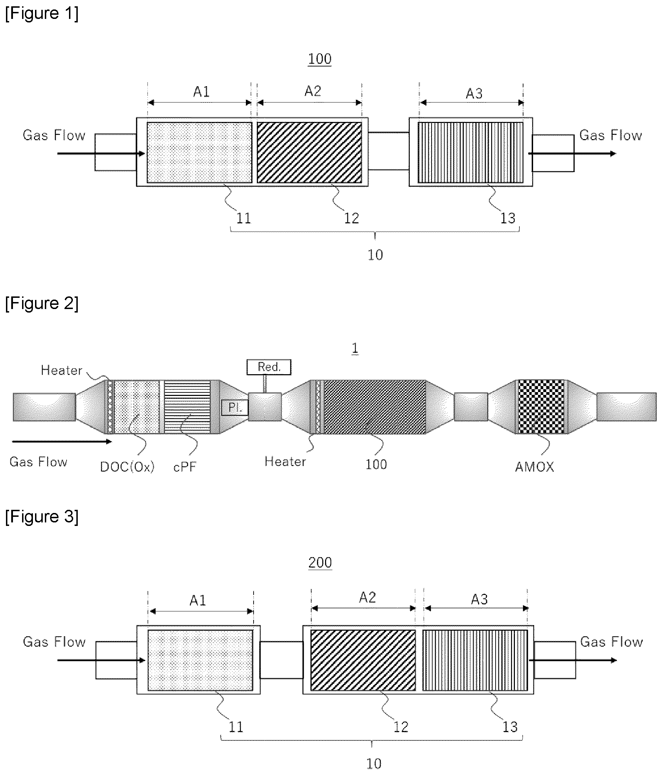

Figure 1 is a general schematic view showing a selective catalytic reduction system 100 for exhaust gas treatment according to the present embodiment. The selective catalytic reduction system 100 according to the present embodiment comprises one or more catalyst carriers 10 (catalyst carriers 11, 12 and 13), and a plurality of catalyst regions A provided on the catalyst carrier 10, and the catalyst region A comprises at least a catalyst region A1 as a first catalyst region containing iron-supported zeolite and arranged on the upstream side of an exhaust gas flow channel for exhaust gas flow (Gas Flow), a catalyst region A2 as a second catalyst region containing iron-supported zeolite and arranged on the downstream side of the exhaust gas flow channel with respect to the catalyst region A1, and a catalyst region A3 as a third catalyst region containing copper-supported zeolite and arranged on the downstream side of the exhaust gas flow channel with respect to the catalyst region A2. The iron-supported zeolite contains zeolite having one or more skeletal structures selected from the group consisting of BEA, CHA, FAU, MOR, MFI and FER, and iron supported on the zeolite, and the copper-supported zeolite contains zeolite having one or more skeletal structures selected from the group consisting of CHA, AEI, AFX and AFT, and copper supported on the zeolite.

The selective catalytic reduction system 100 according to the present embodiment is arranged in an exhaust gas flow channel, and purifies an exhaust gas passing through the exhaust gas flow channel. The selective catalytic reduction system 100 according to the present embodiment is preferably used for applications in which an exhaust gas discharged from a lean combustion engine such as a diesel engine is purified. In one preferred aspect thereof, the selective catalytic reduction system 100 adsorbs ammonia stemming from a reducing agent supplied from a reducing agent supplying unit Red. described later (ammonia generated by thermal decomposition etc., of a urea component when the reducing agent is a urea component), and brings NOₓ and ammonia into contact with each other to perform purification by reduction.

As the catalyst carrier 10, honeycomb structures commonly used in, for example, automobile exhaust gas applications are preferably used. Examples of such honeycomb structures include ceramic monolith carriers such as cordierite, silicon carbide and silicon nitrite, metal honeycomb carriers made of stainless steel or the like, wire mesh carriers made of stainless steel or the like, and steel wool-shaped knitted wire carriers. The shape thereof is not particularly limited, and one having any shape such as, for example, a prismatic column shape, a cylindrical shape, a spherical shape, a honeycomb shape or a sheet shape can be selected. One of these honeycomb structures can be used, or two or more thereof can be appropriately combined and used. As the honeycomb structures for automobile exhaust gas applications, flow-through type structures in which gas flow channels communicate with one another, and wall flow type structures in which some of the end surfaces of the gas flow channels are closed and a gas can be fed through the wall surfaces of the gas flow channels are widely known, and both of these structures are applicable. From the viewpoint of suppressing an excessive increase in pressure loss, flow-through type honeycomb structures are preferably used.

In the present embodiment, three catalyst carriers 11, 12 and 13 are used as the catalyst carrier 10, the catalyst region A1 is provided on the catalyst carrier 11, the catalyst region A2 is provided on the catalyst carrier 12, and the catalyst region A3 is provided on the catalyst carrier 13. As shown in Figure 1, the catalyst regions A1, A2 and A3 mean, respectively, regions where catalyst materials are provided on the respective catalyst carriers 11, 12 and 13 in an exhaust gas flow direction (a length direction of each of the catalyst carriers 11, 12 and 13). For this reason, in the present embodiment, the catalyst region A provided on the catalyst carrier 10 can be perceived as a group of the three catalyst regions A1, A2 and A3. For example, the total length of the catalyst region A can be perceived as a sum of the lengths of the catalyst carriers 11, 12 and 13 in the exhaust gas flow direction. The selective catalytic reduction system 100 of the present embodiment has a configuration in which the catalyst region A3 is arranged separately from the catalyst regions A1 and A2.

The volume (size) of the catalyst carrier 10 (catalyst carriers 11, 12 and 13), the amount of catalyst material supported on each catalyst carrier, and the like are not particularly limited, and can be appropriately adjusted with consideration given to the type, the displacement, and the like of lean combustion engine to which the catalyst carrier is applied, and depending on the required catalyst amount, purification performance, and the like. For example, diesel engines range from those for compact cars with a displacement of about 1 L to those for heavy machines (heavy duties) with a displacement of more than 50 L, and NOₓ and N₂O in the exhaust gas discharged from those diesel engines considerably vary depending on the operation state of the diesel engine, the method for control of combustion, and the like. The selective catalytic reduction system 100 of the present embodiment which is used for removing NOₓ and N₂O in the exhaust gas discharged from those lean combustion engines can be selected in accordance with a diversity of diesel engine displacements ranging from about 1 L to more than 50 L. For example, adjustment can be appropriately made by increasing or decreasing the diameter and the length of a catalyst carrier and the like used, the types and the combination ratios of catalyst materials used, the amount of the catalyst region A supported and the coating length of the catalyst region A (catalyst regions A1, A2 and A3).

In the present embodiment, a catalyst material containing at least zeolite is used as a catalyst material for forming the catalyst region A (hereinafter, sometimes referred to as a "zeolite-based catalyst material"). As the zeolite used here, various zeolites heretofore used for this type of exhaust gas purifying catalyst can be used without particular limitation. Specific examples of the zeolite include, but are not particularly limited to, zeolites of Y type, A type, L type, beta type, mordenite type, ZSM-5 type, ferrierite type, mordenite type, CHA type, AEI type, AFX type, KFI type and SFW type, and crystal metal aluminophosphates such as SAPO and ALPO. One of these zeolites can be used, or two or more thereof can be used in any combination and ratio. As the zeolite, a large number of zeolites of various grades are commercially available from domestic and foreign manufacturers, and depending on required performance, commercial products of various grades can be used. The zeolite can also be produced by methods known in the art. The skeletal structures of zeolites are stored in databases by International Zeolite Association, hereinafter sometimes abbreviated as "IZA", and structures specified in the IUPAC structure code (hereinafter, also referred to simply as the "structure code") are used for reference. Their structures can be identified by comparison with powder X-ray diffraction (hereinafter, referred to as "XRD") patterns described in Collection of simulated XRD powder patterns for zeolites, Fifth revised edition (2007) or XRD patterns described in Zeolite Framework Types of the IZA Structure Committee website: http://www.iza-structure.org/databases/. In Zeolite, the number of acid points varies depending on a Si/Al ratio. In general, zeolite having a low Si/Al ratio (SAR: silica alumina ratio) has a large number of acid points, but is degraded to a large extent in the context of durability in coexistence with water vapor, whereas zeolite having a high Si/Al ratio is excellent in heat resistance, but tends to have a small number of acid points. From such a viewpoint, the Si/Al ratio of zeolite used is preferably 1 to 500, more preferably 1 to 100, still more preferably 1 to 50.

The average particle diameter D₅₀ of the zeolite is not particularly limited, and can be appropriately set depending on desired performance. From the viewpoint of maintaining a large specific surface area and enhancing heat resistance to increase the number of its own catalytically active sites, the average particle diameter D₅₀ of the zeolite is preferably 0.5 µm to 100 µm, more preferably 0.5 µm to 50 µm, still more preferably 0.5 µm to 30 µm.

The BET specific surface area of the zeolite is not particularly limited, and can be appropriately set depending on desired performance. From the viewpoint of maintaining a large specific surface area and enhancing catalytic activity, the BET specific surface area by a BET one-point method is preferably 10 m²/g to 1000 m²/g, more preferably 50 m²/g to 1000 m²/g, still more preferably 100 m²/g to 1000 m²/g.

In general, as solid acid points, cations are present as counter ions in zeolite, and the cation is generally an ammonium ion or a proton. In the present embodiment, it is preferable to use zeolite as transition metal element ion-exchange zeolite in which cation sites of the zeolite are ion-exchanged with any of these transition metal elements. The transition metal element may be dispersively held in the zeolite, and is preferably supported on the surface of the zeolite. Examples of the transition metal element include, but are not particularly limited to, nickel (Ni), cobalt (Co), copper (Cu), iron (Fe), manganese (Mn) and rhenium (Re). Of these, nickel, cobalt, copper, iron and manganese are preferable, and copper and iron are more preferable. One of these transition metal elements can be used, or two or more thereof can be used in any combination and ratio. The ion-exchange rate of the zeolite is not particularly limited, and is preferably 1% to 100%, more preferably 10% to 95%, still more preferably 30% to 90%. An ion-exchange rate of 100% means that all of cationic species in the zeolite are ion-exchanged with transition metal element ions. The amount of the transition metal element added with respect to the zeolite is preferably 0.1 mass% to 10 mass%, more preferably 1 mass% to 10 mass%, still more preferably 2 mass% to 8 mass% in terms of oxide (CuO or Fe₂O₃). All of the transition metal elements added as ion-exchange species may be ion-exchanged, or some of the transition metal elements may be present in the form of an oxide such as copper oxide or iron oxide. A configuration in which the catalyst region A containing a zeolite-based catalyst material as mentioned above is provided on the catalyst carrier 10 enables achievement of high exhaust gas purification performance while inhibiting an increase in pressure loss.

Here, the catalyst region A1 contains, as a catalyst material, at least iron-supported zeolite containing zeolite having one or more skeletal structures selected from the group consisting of BEA, CHA, FAU, MOR, MFI and FER, and iron supported on the zeolite. The catalyst region A1 contains iron-supported zeolite which emits little N₂O, and this, along with the catalyst regions A2 and A3 which are arranged as predetermined as described above, enables achievement of further improved NOₓ and N₂O removal performance. Among the above-mentioned zeolites, iron-supported BEA type zeolite is preferable from the viewpoint of NOₓ removal performance at low temperature. The amount of the catalyst region A1 supported is not particularly limited, and can be appropriately set depending on desired performance. From the viewpoint of the balance between catalyst performance and pressure loss, etc., the amount of the catalyst region A1 supported is preferably 10 g/L to 500 g/L or less, more preferably 20 g/L to 400 g/L, still more preferably 40 g/L to 300 g/L in terms of zeolite per L of the catalyst carrier 11. In the catalyst region A1, the amount of Fe added with respect to zeolite is preferably 0.1 mass% to 10 mass%, more preferably 1.0 mass% to 8.0 mass%, still more preferably 1.5 mass% to 7.0 mass% in terms of oxide (Fe₂O₃). All of the transition metal elements added as ion-exchange species may be ion-exchanged, or some of the transition metal elements may be present in the form of an oxide such as iron oxide.

Meanwhile, the catalyst region A2 contains, as a catalyst material, at least iron-supported zeolite containing zeolite having one or more skeletal structures selected from the group consisting of BEA, CHA, FAU, MOR, MFI and FER, and iron supported on the zeolite. The catalyst region A2 contains iron-supported zeolite which emits little N₂O, and this, along with the catalyst regions A1 and A3 which are arranged as predetermined as described above, enables achievement of further improved NOₓ and N₂O removal performance. Among the above-mentioned zeolites, iron-supported CHA type zeolite is preferable from the viewpoint of suppressing deterioration of purification performance due to the influence of poisoning by HC species. The amount of the catalyst region A2 supported is not particularly limited, and can be appropriately set depending on desired performance. From the viewpoint of the balance between catalyst performance and pressure loss, and the like, the amount of the catalyst region A2 supported is preferably 10 g/L to 500 g/L or less, more preferably 20 g/L to 400 g/L, still more preferably 40 g/L to 300 g/L in terms of zeolite per L of the catalyst carrier 12. In the catalyst region A2, the amount of Fe added with respect to zeolite is preferably 0.1 mass% to 10 mass%, more preferably 1.0 mass% to 8.0 mass%, still more preferably 1.5 mass% to 7.0 mass% in terms of oxide (Fe₂O₃). All of the transition metal elements added as ion-exchange species may be ion-exchanged, or some of the transition metal elements may be present in the form of an oxide such as iron oxide.

On the other hand, the catalyst region A3 contains, as a catalyst material, at least copper-supported zeolite containing zeolite having one or more skeletal structures selected from the group consisting of CHA, AEI, AFX and AFT, and copper supported on the zeolite. The catalyst region A3 contains copper-supported zeolite which exhibits a high NOₓ removal rate over a wide range of NO₂/NOₓ ratios, and this, along with the catalyst regions A1 and A2 which are arranged as predetermined as described above, enables achievement of further improved NOₓ and N₂O removal performance. Among the above-mentioned zeolites, copper-supported CHA type zeolite is preferable from the viewpoint of reducing NOₓ emissions. The amount of the catalyst region A3 supported is not particularly limited, and can be appropriately set depending on desired performance. From the viewpoint of the balance between catalyst performance and pressure loss, and the like, the amount of the catalyst region A3 supported is preferably 10 g/L to 500 g/L or less, more preferably 20 g/L to 400 g/L, still more preferably 40 g/L to 300 g/L in terms of zeolite per L of the catalyst carrier 13. In the catalyst region A3, the amount of Cu added with respect to zeolite is preferably 0.1 mass% to 10 mass%, more preferably 1.0 mass% to 8.0 mass%, still more preferably 1.5 mass% to 7.0 mass% in terms of oxide (CuO). All of the transition metal elements added as ion-exchange species may be ion-exchanged, or some of the transition metal elements may be present in the form of an oxide such as copper oxide.

The total amount of the catalyst region A supported is not particularly limited, and can be appropriately set depending on desired performance. From the viewpoint of NOₓ and N₂O removal performance, the total amount of the catalyst region A supported is preferably 50 g/L or more and 800 g/L or less, more preferably 100 g/L or more and 700 g/L or less, still more preferably 150 g/L or more and 600 g/L or less.

The lengths of the catalyst regions A1, A2 and A3 supported (lengths in an exhaust gas flow direction) are not particularly limited, and can each be appropriately set depending on desired performance. From the viewpoint of NOₓ and N₂O removal performance, it is preferable to satisfy the following relationship when the total length of the catalyst regions A1, A2 and A3 supported is defined as 100.

The length of the catalyst region A1 supported is preferably 5 to 40, more preferably 8 to 30.

The length of the catalyst region A2 supported is preferably 5 to 40, more preferably 8 to 30.

The length of the catalyst region A3 supported is preferably 50 to 90, more preferably 40 to 84.

The ranges where the catalyst regions A1, A2 and A3 are formed are not particularly limited. The catalyst regions A1, A2 and A3 may be formed over the entire length of the catalyst carriers 11, 12 and 13, respectively, or may be formed only on a part of the catalyst carriers 11, 12 and 13, respectively, in the exhaust gas flow direction. When the catalyst regions A1, A2 and A3 are formed only on a part of the catalyst carriers 11, 12 and 13, the catalyst regions A1, A2 and A3 may be formed on the upstream side or the downstream side of the catalyst carriers 11, 12 and 13 in the exhaust gas flow direction.

As long as the effect of the selective catalytic reduction system for exhaust gas treatment according to the present disclosure is not excessively inhibited, the catalyst region A (catalyst regions A1, A2 and A3) may contain oxygen storage and release materials having not only an excellent oxygen storage capacity but also relatively high heat resistance, such as seria-based oxides and ceria-zirconia-based composite oxides, and other base material particles which have been heretofore used for this type of exhaust gas purifying catalyst. Examples of other base material particles include inorganic compounds known in the art, for example, oxides such as aluminum oxides (alumina: Al₂O₃) such as γ-alumina, β-alumina, δ-alumina, η-alumina and θ-alumina, zirconium oxide (zirconia: ZrO₂), silicon oxide (silica: SiO₂) and titanium oxide (titania: TiO₂), and composite oxides containing any of these oxides as a main component, and the type thereof is not particularly limited. They may be composite oxides or solid solutions containing a rare earth element such as lanthanum or yttrium, a transition metal element or an alkaline earth metal. One type of these oxygen storage and release materials and other base material particles can be used, or two or more thereof can be used in any combination and ratio.

The catalyst region A (catalyst regions A1, A2 and A3) may contain various catalyst materials and co-catalyst known in the art, and various additives. The catalyst region A may contain binders such as a variety of sols such as, for example, boehmite, alumina sol, titania sol, silica sol and zirconia sol; and soluble salts such as aluminum nitrate, aluminum acetate, titanium nitrate, titanium acetate, zirconium nitrate and zirconium acetate. The catalyst region A (catalyst regions A1, A2 and A3) may further contain a Ba-containing compound in addition to the above-described components. Further, the catalyst region A (catalyst regions A1, A2 and A3) may contain a dispersion stabilizer such as a nonionic surfactant or an anionic surfactant; a pH adjuster; a viscosity modifier; and the like. Here, a thickening agent is not particularly limited, and examples thereof include polysaccharides such as sucrose, polyethylene glycol, carboxymethyl cellulose and hydroxymethyl cellulose.

Further, the catalyst region A (catalyst regions A1, A2 and A3) may contain an alkaline earth metal element such as Ca or Mg, and a platinum group element such as rhodium (Rh), ruthenium (Ru), palladium (Pd), platinum (Pt) or iridium (Ir) or a noble metal element such as gold (Au) or silver (Ag) as a catalytically active element. One of the platinum group elements and noble metal elements can be used, or two or more thereof can be used in any combination and ratio. It is to be noted that preferably, the catalyst region A is substantially free of the platinum group element or the noble metal element because it oxidizes an ammonia component to generate NOₓ. From such a viewpoint, the content of the platinum group element and the noble metal element in the catalyst region A (catalyst regions A1, A2 and A3) is preferably less than 3 g/L, more preferably less than 1 g/L, still more preferably less than 0.5 g/L in terms of the amount of metal per L of the catalyst carrier 10 (catalyst carriers 11, 12 and 13).

The catalyst region A (catalyst regions A1, A2 and A3) may be directly placed on the catalyst carrier 10 (catalyst carriers 11, 12 and 13), or may be provided on the catalyst carrier 10 with a binder layer, an underlayer or the like interposed therebetween. As these binder layer, the underlayer or the like, one known in the art can be used, and the type thereof is not particularly limited. It is possible to use, for example, oxides such as oxygen storage and release materials (OSC) such as cerium oxide (ceria: CeO₂) and ceria-zirconia composite oxides (CZ composite oxides), aluminum oxides (alumina: Al₂O₃) such as γ-alumina, β-alumina, δ-alumina, η-alumina and θ-alumina, zirconium oxide (zirconia: ZrO₃), silicon oxide (silica: SiO₂) and titanium oxide (titania: TiO₂), and composite oxides containing any of these oxides as a main component. The coating mass of the binder layer, the underlayer or the like is not particularly limited, and is preferably 1 g/L to 150 g/L, more preferably 10 g/L to 100 g/L per L of the catalyst carrier 10 (catalyst carriers 11, 12 and 13).

The selective catalytic reduction system 100 of the present embodiment, in which the catalyst region A1 that emits little N₂O and has excellent NOₓ removal performance at low temperature is arranged on the upstream side, the catalyst region A2 that is excellent in resistance to deterioration of purification performance due to the influence of poisoning by HC species is arranged on the downstream side of the catalyst region A1, and the catalyst region A3 that exhibits a high NOₓ removal rate is arranged on the downstream side of the catalyst region A2, thus enables achievement of excellent NOₓ and N₂O removal performance. In other words, there are a trade-off relationship in which NOₓ emissions can be reduced, but the amount of N₂O tends to increase in the case of only the catalyst region A3, a trade-off relationship in which NOₓ removal performance tends to be insufficient in the case of only the catalyst regions A1 and A2, and a trade-off relationship in which poisoning resistance is low and NOₓ and N₂O removal performance tends to be insufficient in the case of only the catalyst regions A1 and A3, but the selective catalytic reduction system 100 of the present embodiment functions as a new SCR system freed of these trade-off relationships.

Figure 2 is a schematic view showing a general configuration of an exhaust gas purification apparatus 1 for lean combustion engines in which the selective catalytic reduction system 100 of the present embodiment is used as a SCR. The exhaust gas purification apparatus 1 for lean combustion engines comprises at least: at least one or more oxidation catalysts Oₓ that are arranged in an exhaust gas flow channel and that oxidize at least one selected from the group consisting of CO, HC, NO and NH₃ in an exhaust gas discharged from a lean combustion engine such as diesel engine; a catalyst-coated particulate filter cPF that is arranged in the exhaust gas flow channel and that collects particulate components PM in the exhaust gas, and combusts or oxidizes and removes the particulate components; a reducing agent supplying unit Red. that supplies one or more reducing agents selected from the group consisting of a urea component and an ammonia component into the exhaust gas flow channel; and the selective catalytic reduction system 100 that adsorbs ammonia and brings the ammonia into contact with NOₓ to perform reduction. In the present embodiment, an ammonia oxidation catalyst (AMOX) that oxidizes and removes excess ammonia is further provided on the downstream side of the exhaust gas flow channel of the selective catalytic reduction system 100. Further, a plasma generating apparatus PI. for plasma-treating an exhaust gas (not shown), and the like may be provided. Hereinafter, the constituent elements will be described in detail.

### [Oxidation Catalyst Oₓ]

The oxidation catalyst Oₓ is a catalyst that oxidizes CO, HC, NO, NH₃ and the like in the exhaust gas. In the present description, the oxidation catalyst Oₓ conceptually includes, in addition to the above-described DOC, a lean NOₓ storage catalyst (LNT: lean NOₓ trap) which stores NOₓ under a lean condition and releases NOₓ under a rich condition to oxidize CO and HC to CO₂ and H₂O and reduce NOₓ to N₂, and catalyst-coated PF (cPF) obtained by applying such a catalyst onto PF. As the oxidation catalyst Oₓ in the exhaust gas purification apparatus 1 for lean combustion engines, composite particles including base material particles of metal oxide such as alumina, zirconia and ceria and zeolite and platinum group elements (PGMs: platinum group metals) as catalytically active components supported on such carriers are generally used. These are known in the art in a variety of kinds, and as the oxidation catalyst Oₓ, one of the various oxidation catalysts can be used, or two or more thereof can be appropriately combined and used in any combination.

As the oxidation catalyst Oₓ, catalysts are preferably used in which a catalyst layer including base material particles that are inorganic particulates and a platinum group element-supported catalyst material with a platinum group element supported on the base material particles is provided on an integral structure type catalyst carrier such as a honeycomb structure. By forming the oxidation catalyst Oₓ using such a platinum group element-supported catalyst material, high exhaust gas purification performance can be achieved while an increase in pressure loss is inhibited.

Here, as the inorganic particulates as base material particles supporting a platinum group element, an inorganic compound heretofore used in this type of exhaust gas purifying catalysts can be considered. Examples thereof include oxides such as zeolite, cerium oxide (ceria: CeO₂), oxygen storage and release materials (OSC) such as ceria-zirconia composite oxides (CZ composite oxides), aluminum oxides (alumina: Al₂O₃) such as γ-alumina, β-alumina, δ-alumina, η-alumina and θ-alumina, zirconium oxide (zirconia: ZrO₂), silicon oxide (silica: SiO₂) and titanium oxide (titania: TiO₂), and composite oxides containing any of these oxides as a main component, and the type thereof is not particularly limited. They may be composite oxides or solid solutions containing a rare earth element such as lanthanum or yttrium, a transition metal element or an alkaline earth metal. One of these inorganic particulates can be used, or two or more thereof can be used in any combination and ratio. The oxygen storage and release material means a material which stores or releases oxygen depending on an external environment.

The average particle diameter D₅₀ of the base material particles of the oxidation catalyst Oₓ can be appropriately set depending on desired performance, and is not particularly limited. From the viewpoint of maintaining a large specific surface area and enhancing heat resistance to increase the number of their own catalytically active sites, the average particle diameter D₅₀ of the base material particles is preferably 0.5 µm to 100 µm, more preferably 1 µm to 100 µm, still more preferably 1µm to 50 µm. The BET specific surface area of the base material particles can be appropriately set depending on desired performance, and is not particularly limited, and from the viewpoint of maintaining a large specific surface area and enhancing catalytic activity, the BET specific surface area by the BET one-point method is preferably 10 m²/g to 500 m²/g, more preferably 20 m²/g to 300 m²/g, still more preferably 30 m²/g to 200 m²/g. As various materials to be used as the base material particles of the oxidation catalyst Oₓ, a large number of materials of various grades are commercially available from domestic and foreign manufacturers, and depending on required performance, commercial products of various grades can be used as the base material particles. The base material particles can also be produced by methods known in the art.

Examples of the platinum group element include platinum (Pt), palladium (Pd), rhodium (Rh), ruthenium (Ru), iridium (Ir) and osmium (Os). One of the platinum group elements can be used, or two or more thereof can be used in any combination and ratio. From the viewpoint of improving the exhaust gas purification performance, suppressing advancement of grain growth (sintering) of the platinum group element on the base material particles, etc., the content ratio of the platinum group element in the oxidation catalyst Oₓ (mass of the platinum group element per L of the integral structure type catalyst carrier) is, normally, preferably 0.1 g/L to 20 g/L, more preferably 0.2 g/L to 15 g/L, still more preferably 0.3 g/L to 10 g/L.

The oxidation catalyst Oₓ may contain various other catalyst materials and co-catalyst known in the art and various additives. The oxidation catalyst Oₓ may contain binders such as a variety of sols such as, for example, boehmite, alumina sol, titania sol, silica sol and zirconia sol; and soluble salts such as aluminum nitrate, aluminum acetate, titanium nitrate, titanium acetate, zirconium nitrate and zirconium acetate. The oxidation catalyst Oₓ may further contain a Ba-containing compound in addition to the above-described components. By adding a Ba-containing compound, improvement of heat resistance, and activation of catalyst performance can be expected. Examples of the Ba-containing compound include, but are not particularly limited to, sulfates, carbonates, composite oxides and oxides. More specific examples thereof include BaO, Ba(CH₃COO)₂, BaO₂, BaSO₄, BaCO₃, BaZrOs and BaAl₂O₄. Further, the oxidation catalyst Oₓ may contain a dispersion stabilizer such as a nonionic surfactant or an anionic surfactant; a pH adjuster; a viscosity modifier; and the like.

As the integral structure type catalyst carrier supporting the oxidation catalyst Oₓ, honeycomb structures commonly used for automobile exhaust gas applications are preferably used. Examples of such honeycomb structures include ceramic monolith carriers such as cordierite, silicon carbide and silicon nitrite, metal honeycomb carriers made of stainless steel or the like, wire mesh carriers made of stainless steel or the like, and steel wool-shaped knitted wire carriers. The shape thereof is not particularly limited, and one having any shape such as, for example, a prismatic column shape, a cylindrical shape, a spherical shape, a honeycomb shape or a sheet shape can be selected. One of these honeycomb structures can be used, or two or more thereof can be appropriately combined and used. As the honeycomb structures for automobile exhaust gas applications, flow-through type structures in which gas flow channels communicate with one another, and wall flow type structures in which some of the end surfaces of the gas flow channels are closed and a gas can be fed through the wall surfaces of the gas flow channels are widely known, and both of these structures are applicable.

In the above-described oxidation catalyst Oₓ, the total coverage of the above-described catalyst layer is not particularly limited, and from the viewpoint of the balance between catalyst performance and pressure loss, etc., the total coverage per L of the integral structure type catalyst carrier is preferably 1 g/L to 500 g/L, more preferably 2 g/L to 450 g/L, still more preferably 2 g/L to 80 g/L for the wall flow type catalyst carrier and 50 g/L to 300 g/L for the flow-through type catalyst carrier.

The oxidation catalyst Oₓ may be directly placed on the integral structure type catalyst carrier, or may be provided on the integral structure type catalyst carrier with a binder layer, an underlayer or the like interposed therebetween. As the binder layer, the underlayer or the like, one known in the art can be used, and the type thereof is not particularly limited. It is possible to use oxides such as zeolite, cerium oxide (ceria: CeO₂), oxygen storage and release materials (OSC) such as ceria-zirconia composite oxides (CZ composite oxides), aluminum oxides (alumina: Al₂O₃) such as γ-alumina, β-alumina, δ-alumina, η-alumina and θ-alumina, zirconium oxide (zirconia: ZrO₂), silicon oxide (silica: SiO₂) and titanium oxide (titania: TiO₂), and composite oxides containing any of these oxides as a main component. The coating mass of the binder layer, the underlayer or the like is not particularly limited, and is preferably 1 g per L to 150 g per L, more preferably 10 g per L to 100 g per L of the integral structure type catalyst carrier.

The number of the oxidation catalyst Oₓ provided in the system of the exhaust gas flow channel of the exhaust gas purification apparatus 1 for lean combustion engines may be at least one, or may be two or more (e.g. two to five) depending on required performance etc. When a plurality of oxidation catalysts are provided, the oxidation catalysts Oₓ may be the same type of oxidation catalysts, or different types of oxidation catalysts. It is also possible to use a zone-coated oxidation catalyst zOₓ obtained by zone-coating one catalyst carrier with two oxidation catalyst materials. The zone-coating is not particularly limited as long as a surface of one catalyst carrier is segmented and covered with a plurality of catalyst layers, and it is known that catalyst layers are applied differently in a concentric fashion to a center part and an outer peripheral part with respect to a through-hole direction (axis line) of a catalyst carrier (honeycomb structure), or applied differently in a through-hole depth direction of a honeycomb structure. Here, the way in which the catalyst layers are applied differently in the zone-coating varies depending on the composition of harmful components to be removed, the flow rate, the temperature and the like, and an optimum combination is appropriately set. For example, for applying catalyst layers differently in a front stage and a rear stage in purification of an exhaust gas from an automobile, there are cases where a large number of types of catalyst components are applied on one side and a small number of types of catalyst components are applied on the other side, cases where a large amount of noble metal components are applied on one side and noble metal components are thinly applied on the other side, and the like. In zone-coating where a honeycomb structure is covered with catalyst components in multiple layers, there are cases where a lower layer is thickly applied and an upper layer is thinly applied on one side, and a lower layer is thinly applied and an upper layer is thickly applied on the other side. For the types of catalysts applied differently, the combination of an oxidation catalyst and a reducing catalyst is changed, and even for catalysts of the same type, the composition, the concentration of active species, the total coverage on a honeycomb structure, and the like may be changed.

When a plurality of oxidation catalysts Oₓ are provided in the system of the exhaust gas flow channel of the exhaust gas purification apparatus 1 for lean combustion engines according to the present embodiment, the oxidation catalysts Oₓ may be arranged adjacently, or arranged separately in the exhaust gas flow channel with the selective catalytic reduction system 100, the catalyst-coated particulate filter cPF, the reducing agent supplying unit Red., the heating device (heater), the plasma generating apparatus PI. and the like interposed between the oxidation catalysts Oₓ. Depending on desired performance, for example, the oxidation catalyst Oₓ can be arranged on the upstream side of the exhaust gas flow channel with respect to the selective catalytic reduction system 100, or the oxidation catalyst Oₓ can be arranged on the downstream side of the exhaust gas flow channel with respect to the selective catalytic reduction system 100, and when a plurality of oxidation catalysts Oₓ are provided, these arrangement examples can be combined and applied.

### [Particulate Filter cPF]

In the exhaust gas purification apparatus 1 for lean combustion engines according to the present embodiment, a particulate filter cPF obtained by applying a catalyst material to a particulate filter PF formed of the above-described wall flow type structure is provided on the downstream side of the above-described oxidation catalyst Oₓ. The particulate filter PF (catalyst-coated particulate filter cPF) is aimed at trapping particulate components (PM) such as soot in the exhaust gas discharged from the lean combustion engine, and if necessary, spraying unburned light oil on a regular basis to combust or oxidize and remove the particulate components. Such particulate filters PF (catalyst-coated particulate filters cPF) are widely known in the art as diesel particulate collection filters DPF, catalyst-coated diesel particulate collection filters cDPF, catalyzed combustion filters (CSF: catalyzed soot filter) and the like.

### [Reducing Agent Supplying Unit Red.]

In the exhaust gas purification apparatus 1 for lean combustion engines according to the present embodiment, the reducing agent supplying unit Red. supplies one or more reducing agents selected from a urea component and an ammonia component into the exhaust gas flow channel. As the reducing agent supplying unit Red., one known in the art can be used, and the type thereof is not particularly limited. Normally, one composed of a reducing agent storage tank, a pipe connected to the tank, and a spray nozzle mounted at the tip of the pipe is used (not shown).

The spray nozzle of the reducing agent supplying unit Red. is placed on the upstream side of the selective catalytic reduction system 100. In particular, in the selective catalytic reduction system 100 of the present embodiment, the above-described catalyst region A (catalyst regions A1, A2 and A3) excellent in NOₓ and N₂O removal performance is employed, and therefore it is preferable that the spray nozzle of the reducing agent supplying unit Red. be placed immediately before the upstream side of the selective catalytic reduction system 100 for sufficiently exhibiting the function of the catalyst region A by eliminating other factors. When a plurality of selective catalytic reduction systems 100 or other SCRs are used in combination, spray nozzles of the reducing agent supplying unit Red. may be provided at a plurality of points in the case where these catalysts are arranged separately.

The reducing component is selected from a urea component and an ammonia component. As the urea component, a standardized aqueous urea solution at a concentration of 31.8 mass% to 33.3 mass%, such as, for example, Adblue (product name) can be used. As the ammonia component, aqueous ammonia as well as ammonia gas or the like can be used. Since NH₃ which is a reducing component itself has harmful properties such as an irritating odor, a method is preferable in which rather than directly using NH₃ as a reducing component, aqueous urea is added from the upstream side of the selective catalytic reduction system 100 to generate NH₃ through thermal decomposition or hydrolysis, and the NH₃ is applied as the reducing agent.

### [Heating Device (Heater)]

In the exhaust gas purification apparatus 1 for lean combustion engines according to the present embodiment, an electric heating device (heater) (catalyst heating device) is provided in the exhaust gas flow channel on the upstream side of the oxidation catalyst Oₓ and the exhaust gas flow channel on the downstream side of the spray nozzle of the reducing agent supplying unit Red. and on the upstream side of the selective catalytic reduction system 100. The heating device is electrically connected to ECU and an on-vehicle power supply (not shown), and by controlling the power outputs of the ECU and the power supply, the temperature of the heating device (Heater), and hence the temperature of the exhaust gas in the exhaust gas flow channel can be controlled. The catalytic performance of the oxidation catalyst Oₓ can be improved by, for example, applying heat with the heating device (heater) on the upstream side of the oxidation catalyst Oₓ at the time of cold starting. One or more reducing agents selected from the group consisting of a urea component and an ammonia component and supplied from the reducing agent supplying unit Red. are heated with the heating device (Heater) in the exhaust gas flow channel to turn into NH₃ through thermal decomposition or hydrolysis, and adsorbed to the selective catalytic reduction system 100 on the downstream side of the exhaust gas flow channel. The reactivity of urea in the hydrolysis reaction can vary depending on the concentration, the combination composition, the pH and the like of aqueous urea, and can be efficiently controlled by controlling the temperature of the exhaust gas in the exhaust gas flow channel using the heating device (heater). In the exhaust gas flow channel, temperature sensors, NOₓ sensors and the like electrically connected to ECU are provided at various points, so that the NOₓ concentration and the exhaust gas temperature are monitored as needed.

In the present embodiment, the heating device (Heater) is composed of a metal honeycomb, a jacket type electric heating device mounted on the outer peripheral of the metal honeycomb, and a coil type electric heating device mounted so as to be partially embedded in the metal honeycomb main body (not shown). This metal honeycomb can be electrically heated by control of the control unit ECU, and by heat generation from the metal honeycomb, the temperature of the exhaust gas passing through the exhaust gas flow channel can be controlled. In the present embodiment, a heat insulating material is provided on the outer periphery of an exhaust gas flow channel over the entire length (not shown). The heat insulating material is not particularly limited, and can be appropriately selected from those known in the art, and for example, one obtained using cellulose fibers, rock wool or the like is suitably used. The heating device (Heater) used here may be, for example, a jacket type electric heating device or an electrically heated catalyst (EHC) with a SCR catalyst supported on the metal honeycomb main body. Heating of the metal honeycomb can also be performed by causing the metal honeycomb itself to generate heat directly with an electric current passing through the metal honeycomb main body. In this case, by connecting the metal honeycomb to an on-vehicle power supply and controlling the power output of the power supply by the control unit ECU, the temperature of the metal honeycomb, and hence the temperature of the exhaust gas in the exhaust flow channel can be controlled.

### [Ammonia Oxidation Catalyst AMOX]

In the exhaust gas purification apparatus 1 for lean combustion engines according to the present embodiment, an ammonia oxidation catalyst AMOX which oxidizes and removes excess ammonia is provided on the downstream side of the selective catalytic reduction system 100. As the ammonia oxidation catalyst AMOX, one known in the art can be used, and the type thereof is not particularly limited.

Normally, in a urea SCR system, the ammonia oxidation catalyst AMOX is additionally used if NOₓ or NH₃ cannot be purified to a regulatory value or a smaller value. Therefore, the ammonia oxidation catalyst AMOX includes a catalyst having a function of oxidizing NH₃, and a catalyst component having a function of purifying NOₓ. The catalyst having a function of oxidizing NH₃ is preferably one in which one or more elements selected from platinum, palladium, rhodium and the like are supported on an inorganic material composed of one or more selected from alumina, silica, titania, zirconia and the like. It is also preferable to use an inorganic material whose heat resistance is improved by adding a co-catalyst such as a rare earth, an alkali metal or an alkaline earth metal. Platinum and palladium as noble metals exhibit excellent oxidative activity. When the noble metal is supported on the inorganic material having a high specific surface area and high heat resistance, the noble metal component is hardly sintered, and thus the specific surface area of the noble metal is kept high to increase the number of active sites, so that high activity can be exhibited. On the other hand, as the catalyst having a function of purifying NOₓ, all of the non-zeolite-based catalyst materials and the zeolite-based catalyst materials described above can be used. The two types of catalysts may be uniformly mixed and applied to a honeycomb structure of integral type, but may be applied such that a catalyst having a function of oxidizing NH₃ forms a lower layer and a catalyst having a function of purifying NOₓ forms an upper layer. The volumes (sizes) of the ammonia oxidation catalyst AMOX, the coating mass of catalyst material, and the like are not particularly limited, and can be adjusted with consideration given to the type, the displacement and the like of an engine to which the exhaust gas purification apparatus 100 for lean combustion engines according to the present embodiment is applied, and depending on the required catalyst amount, purification performance and the like.

Two or more (two to five) ammonia oxidation catalysts AMOX described above may be provided depending on required performance or the like. The ammonia oxidation catalyst AMOX can also be used as zone-coated AMOX (zAMOX) by zone-coating one catalyst carrier with two catalyst materials. When a plurality of ammonia oxidation catalysts AMOX is provided, the arrangement state of the ammonia oxidation catalysts AMOX is not particularly limited. That is, a plurality of ammonia oxidation catalysts AMOX may be arranged adjacently or arranged separately. From the viewpoint of oxidizing and removing excess ammonia, it is preferable that at least one of a plurality of ammonia oxidation catalysts AMOX be provided on the downstream side of the selective catalytic reduction system 100, and more preferably provided at the most downstream in the exhaust gas flow channel preferably containing the oxidation catalyst Ox and the selective catalytic reduction system 100.

### [Plasma Generating Apparatus PI.]

In the exhaust gas purification apparatus 1 for lean combustion engines according to the present embodiment, a plasma generating apparatus PI. for plasma-treating an exhaust gas is provided on the downstream side of the oxidation catalyst Oₓ and on the upstream side on the selective catalytic reduction system 100. This plasma generating apparatus PI. is a so-called atmospheric pressure plasma generating apparatus (plasma reactor) which generates a low-temperature plasma obtained by discharge in the atmosphere or the like and having low electronic energy. As the plasma generating apparatus PI., one known in the art can be used, and the type thereof is not particularly limited. The exhaust gas passing through the exhaust gas flow channel is treated with a plasma generated by the plasma generating apparatus PI., so that the NOₓ concentration can be further reduced (so-called plasma assisted SCR).

As described in detail above, the exhaust gas purification apparatus 1 for lean combustion engines according to the present embodiment can be used as an apparatus for purifying an exhaust gas generated from an internal-combustion engine such as diesel engine equipped with a urea SCR system, and is useful as an exhaust gas purifying catalyst for internal-combustion engines such as diesel engines, particularly an exhaust gas purification apparatus for diesel automobiles.

The exhaust gas purification apparatus 1 for lean combustion engines according to the present embodiment can be arranged in the exhaust systems of various lean combustion engines. As described above, the numbers and locations of the oxidation catalyst Oₓ, the reducing agent supplying unit Red., the catalyst-coated particulate filter cPF, the selective catalytic reduction system 100, the plasma generating apparatus PI., the reducing agent supplying unit Red., the ammonia oxidation catalyst AMOX and the like placed, and the arrangements thereof are not particularly limited to those in the present embodiment, can be appropriately adjusted according to the exhaust gas regulation, the type and the displacement of lean combustion engines applied, the required catalyst amount and purification performance, and the like, and are not particularly limited. For example, the placement location can be appropriately selected from a plurality of locations such as positions immediately below the exhaust system and positions below the floor behind the exhaust system. It is also possible to further provide selective reduction catalysts SCR other than the selective catalytic reduction system 100.

### (Second Embodiment)

Figure 3 is a general schematic view showing a selective catalytic reduction system 200 for exhaust gas treatment according to the present embodiment. The selective catalytic reduction system 200 of the present embodiment has the same configuration as in the first embodiment except that the catalyst region A1 is arranged separately from the catalyst regions A2 and A3. Such a configuration also enables the implementation of the selective catalytic reduction system for exhaust gas treatment according to the present disclosure.

### (Third Embodiment)

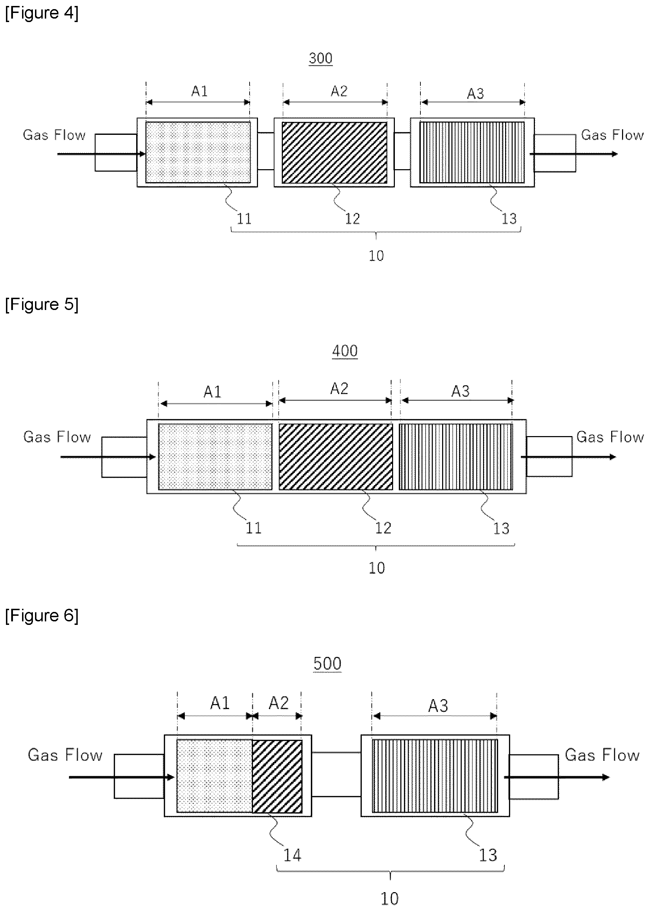

Figure 4 is a general schematic view showing a selective catalytic reduction system 300 for exhaust gas treatment according to the present embodiment. The selective catalytic reduction system 300 of the present embodiment has the same configuration as in the first embodiment except that the catalyst region A1, the catalyst region A2 and the catalyst region A3 are arranged separately. Such a configuration also enables the implementation of the selective catalytic reduction system for exhaust gas treatment according to the present disclosure.

### (Fourth Embodiment)

Figure 5 is a general schematic view showing a selective catalytic reduction system 400 for exhaust gas treatment according to the present embodiment. The selective catalytic reduction system 400 of the present embodiment has the same configuration as in the first embodiment except that the catalyst region A1, the catalyst region A2 and the catalyst region A3 are arranged adjacently. Such a configuration also enables the implementation of the selective catalytic reduction system for exhaust gas treatment according to the present disclosure.

### (Fifth Embodiment)

Figure 6 is a general schematic view showing a selective catalytic reduction system 500 for exhaust gas treatment according to the present embodiment. The selective catalytic reduction system 500 of the present embodiment has the same configuration as in the first embodiment except that the catalyst region A1 and the catalyst region A2 are provided on one catalyst carrier 14 by zone-coating on the catalyst carrier 14. Such a configuration also enables the implementation of the selective catalytic reduction system for exhaust gas treatment according to the present disclosure.

### (Sixth Embodiment)

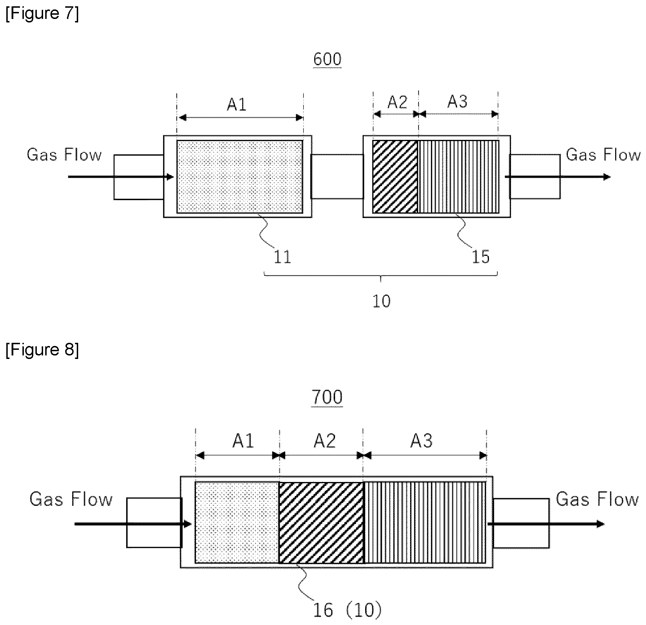

Figure 7 is a general schematic view showing a selective catalytic reduction system 600 for exhaust gas treatment according to the present embodiment. The selective catalytic reduction system 600 of the present embodiment has the same configuration as in the first embodiment except that the catalyst region A2 and the catalyst region A3 are provided on one catalyst carrier 15 by zone-coating on the catalyst carrier 15. Such a configuration also enables the implementation of the selective catalytic reduction system for exhaust gas treatment according to the present disclosure.

### (Seventh Embodiment)

Figure 8 is a general schematic view showing a selective catalytic reduction system 700 for exhaust gas treatment according to the present embodiment. The selective catalytic reduction system 700 of the present embodiment has the same configuration as in the first embodiment except that the catalyst region A1, the catalyst region A2 and the catalyst region A3 are provided on one catalyst carrier 16 by zone-coating on the catalyst carrier 16. Such a configuration also enables the implementation of the selective catalytic reduction system for exhaust gas treatment according to the present disclosure.

### Examples

Hereinafter, the characteristics of the selective catalytic reduction system for exhaust gas treatment according to the present disclosure will be described in further detail by way of Examples and Comparative Examples, but the present disclosure is in no way limited thereto. That is, the materials, use amounts, ratios, treatment details, treatment procedures and the like described in Examples below can be appropriately changed without departing from the spirit of the present disclosure. The values of various production conditions and evaluation results in Examples below have meanings as preferred upper limit values or preferred lower limit values in the embodiments of the present disclosure, and preferred ranges may be ranges defined by combinations of the values of the upper limits or lower limits and values of Examples, or combinations of the values of Examples below.

### (Preparation Example 1) Fe-Supported BEA Type Zeolite

Fe-supported BEA type zeolite was obtained by supporting Fe on BEA type zeolite prepared by hydrothermal synthesis method (SAR: 10, containing Fe at 4.8 mass% in terms of Fe₂O₃). A binder, a surfactant and deionized water were mixed in predetermined amounts with the Fe-supported BEA type zeolite, and the mixture was milled with a ball mill to obtain a catalyst slurry 1.

### (Preparation Example 2) Fe-Supported CHA Type Zeolite

Fe-supported CHA type zeolite was obtained by supporting Fe on CHA type zeolite prepared by hydrothermal synthesis method (SAR: 24, containing Fe at 2.9 mass% in terms of Fe₂O₃). A binder, zirconium acetate, a surfactant and deionized water were mixed in predetermined amounts with the Fe-supported CHA type zeolite, and the mixture was milled with a ball mill to obtain a catalyst slurry 2.

### (Preparation Example 3) Cu-Supported CHA Type Zeolite

Cu-supported CHA type zeolite was obtained by supporting Cu on CHA type zeolite prepared by hydrothermal synthesis method (SAR: 24, containing Cu at 3.8 mass% in terms of CuO). A binder, zirconium acetate, a surfactant and deionized water were mixed in predetermined amounts with the Cu-supported CHA type zeolite, and the mixture was milled with a ball mill to obtain a catalyst slurry 3.

### (Production Example 1)

The catalyst slurry 1 was applied by a wash coating method to a honeycomb flow-through type cordierite catalyst carrier 1 being an integral structure type catalyst carrier (300 cpsi/5 mil, 10.5 φ in diameter × 3 inch in length, 4.257 L), dried, and then fired in an air atmosphere at 550°C for 30 minutes to form a catalyst region on the catalyst carrier. Here, the amount of the catalyst region supported per L of the catalyst carrier was set to 157 g/L.

### (Production Example 2)

The catalyst slurry 2 was applied by a wash coating method to a honeycomb flow-through type cordierite catalyst carrier 2 being an integral structure type catalyst carrier (300 cpsi/5 mil, 10.5 φ in diameter × 3 inch in length, 4.257 L), dried, and then fired in an air atmosphere at 550°C for 30 minutes to form a catalyst region on the catalyst carrier. Here, the amount of the catalyst region supported per L of the catalyst carrier was set to 157 g/L.

### (Production Example 3)

The catalyst slurry 3 was applied by a wash coating method to a honeycomb flow-through type cordierite catalyst carrier 3 being an integral structure type catalyst carrier (300 cpsi/5 mil, 10.5 φ in diameter × 6 inch in length, 8.514 L), dried, and then fired in an air atmosphere at 550°C for 30 minutes to form a catalyst region on the catalyst carrier. Here, the amount of the catalyst region supported per L of the catalyst carrier was set to 180 g/L.

### (Production Example 4)

The catalyst slurry 3 was applied by a wash coating method to a honeycomb flow-through type cordierite catalyst carrier 4 being an integral structure type catalyst carrier (300 cpsi/5 mil, 10.5 φ in diameter × 3 inch in length, 4.257 L), dried, and then fired in an air atmosphere at 550°C for 30 minutes to form a catalyst region on the catalyst carrier. Here, the amount of the catalyst region supported per L of the catalyst carrier was set to 180 g/L.

### (Hydrothermal Exposure)

In an electric furnace (trade name: OXK-600X manufactured by KYOEI ELECTRIC KILNS CO., LTD.) to which a gas humidification device (trade name: RMG-1000 manufactured by J-Science Lab Co., Ltd.) was connected, the catalyst-coated catalyst carriers of Production Examples 1 to 4 were placed still, and held at 650°C for 100 hours while air containing 10% water vapor was supplied at a flow rate of 70 L/min, thereby performing hydrothermal exposure.

### (Example 1 and Comparative Examples 1 to 4)

The catalyst-coated catalyst carriers of Production Examples 1 to 4 after the hydrothermal exposure were placed in a converter in a predetermined arrangement to conduct an engine test. In the engine test, an 8 L CRS TI tabletop diesel engine (with an 8 L common rail system with turbo intercooler) was used, and a DOC and a CSF were placed in this order on a side downstream by 1.0 m from the turbo exit of the engine. Further, on the downstream side thereof, the catalyst-coated catalyst carriers of Production Examples 1 to 4 were placed in a converter in the arrangement shown in Table 1, followed by evaluation of exhaust gas purification performance. Here, the concentrations of gases such as NO, NO₂ and N₂O at the catalyst entrance and exit, and catalyst performance was evaluated. In the engine test, JIS No. 2 light oil (S content: 10 ppm or less on a mass basis) was used as a fuel.

As the DOC, a DOC after durability treatment, which was obtained by applying a composite supported catalyst with Pt and Pd supported on an alumina carrier to a honeycomb flow-through type cordierite catalyst carrier 1 (300 cpsi/5 mil, 10.5 φ in diameter × 4.2 inch in length, 5.960 L) by a wash coating method, drying the catalyst, and then firing the catalyst in an air atmosphere at 550°C for 30 minutes, and then performing thermal durability treatment in the electric furnace at 600°C for 100 hours, was used (coating mass per L of catalyst carrier: 100 g/L, Pt coating mass in terms of metal: 1.3 g/L, Pd coating mass in terms of metal: 0.5 g/L).

As the CSF, a CSF after durability treatment, which was obtained by applying a composite supported catalyst with Pt and Pd supported on an alumina carrier to a honeycomb wall flow type cordierite catalyst carrier (260 cpsi/12 mil, 10.5 φ in diameter × 7.3 inch in length, 10.358 L) by a wash coating method, drying the catalyst, and then firing the catalyst in an air atmosphere at 550°C for 30 minutes, and then performing thermal durability treatment in the electric furnace at 650°C for 100 hours, was used (coating mass per L of catalyst carrier: 20 g/L, Pt coating mass in terms of metal: 0.1 g/L, Pd coating mass in terms of metal: 0.05 g/L).

**[Table 1]**

| | DOC | CSF | SCR | | |
|---|---|---|---|---|---|
| Comparative Example 1 | DOC | CSF | Production Example 4 | Production Example 4 | Production Example 3 |
| | | | Cu-CHA | Cu-CHA | Cu-CHA |
| Comparative Example 2 | DOC | CSF | Production Example 1 | Production Example 1 | Production Example 3 |
| | | | Fe-BEA | Fe-BEA | Cu-CHA |
| Comparative Example 3 | DOC | CSF | Production Example 2 | Production Example 2 | Production Example 3 |
| | | | Fe-CHA | Fe-CHA | Cu-CHA |
| Comparative Example 4 | DOC | CSF | Production Example 2 | Production Example 1 | Production Example 3 |
| | | | Fe-CHA | Fe-BEA | Cu-CHA |
| Example 1 | DOC | CSF | Production Example 1 | Production Example 2 | Production Example 3 |
| | | | Fe-BEA | Fe-CHA | Cu-CHA |

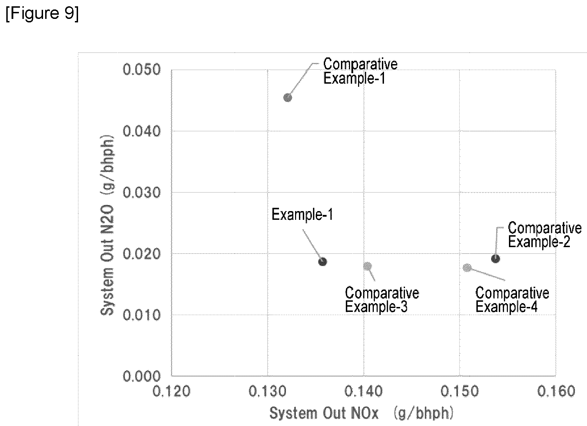

The emissions of NOₓ and N₂O components were evaluated by the FTP mode (federal test procedure). For analysis of NOₓ as an exhaust gas component, measurement was performed using MEXA ONE manufactured by HORIBA, Ltd. For analysis of N₂O as an exhaust gas component, measurement was performed using MEXA 1400QL-NX manufactured by HORIBA, Ltd. For others, measurement was performed using MEXA ONE manufactured by HORIBA, Ltd. Here, FTP is one of test modes in exhaust gas regulations set by United States Environmental Protection Agency. The SCR sample entrance temperature range in the FTP mode in the present evaluation is about 25°C to 305°C (cold) and about 145°C to 315°C (hot). The emissions of NOₓ and N₂O components were measured under the condition of a SCR sample entrance average temperature of about 210°C. The measurement results are shown in Figure 9.

### Industrial Applicability

The exhaust gas purification apparatus for lean combustion engines and the selective reduction catalyst system according to the present disclosure involves relatively low cost per unit catalyst coating mass, and can exhibit excellent NOₓ removal performance under a condition of a relatively low to relatively high amount of ammonia adsorbed. Therefore, the exhaust gas purification apparatus for lean combustion engines and the selective reduction catalyst system according to the present disclosure can be widely and effectively utilized as exhaust gas purification apparatuses for lean combustion internal engines, and are particularly useful as exhaust gas purification apparatuses for lean burn gasoline cars and diesel cars.

### Reference Signs List

- 100: Selective catalytic reduction system
- 10: Catalyst carrier
- 11: Catalyst carrier
- 12: Catalyst carrier
- 13: Catalyst carrier
- A: Catalyst region
- A1: Catalyst region
- A2: Catalyst region
- A3: Catalyst region
- Ox: Oxidation catalyst
- DOC: Diesel oxidation catalyst
- cPF: Catalyst-coated particulate filter
- Red: Reducing agent supplying unit
- SCR: Selective reduction catalyst
- AMOX: Ammonia oxidation catalyst
- Heater: Heating device
- PI: Plasma generating apparatus
- CSF: Catalyzed soot filter
- 14, 15, 16: Catalyst carrier
- 200, 300, 400, 500, 600, 700: Selective catalytic reduction system

## Claims

1. A selective catalytic reduction system for exhaust gas treatment that is arranged in an exhaust gas flow channel and purifies an exhaust gas passing through the exhaust gas flow channel, the selective catalytic reduction system comprising:
one or more catalyst carriers; and a plurality of catalyst regions provided on the catalyst carrier,
wherein the catalyst region comprises at least a first catalyst region containing iron-supported zeolite and arranged on the upstream side of the exhaust gas flow channel, a second catalyst region containing iron-supported zeolite and arranged on the downstream side of the exhaust gas flow channel with respect to the first catalyst region, and a third catalyst region containing copper-supported zeolite and arranged on the downstream side of the exhaust gas flow channel with respect to the second catalyst region,
the iron-supported zeolite contains zeolite having one or more skeletal structures selected from the group consisting of BEA, CHA, FAU, MOR, MFI and FER, and iron supported on the zeolite, and
the copper-supported zeolite contains zeolite having one or more skeletal structures selected from the group consisting of CHA, AEI, AFX and AFT, and copper supported on the zeolite.

2. The selective catalytic reduction system for exhaust gas treatment according to claim 1,
wherein the first catalyst region contains iron-supported BEA type zeolite,
the second catalyst region contains iron-supported CHA type zeolite, and
the third catalyst region contains copper-supported CHA type zeolite.

3. The selective catalytic reduction system for exhaust gas treatment according to claim 1,
wherein the amount of the first catalyst region supported is 10 g/L or more in terms of zeolite per L of the catalyst carrier,
the amount of the second catalyst region supported is 10 g/L or more in terms of zeolite per L of the catalyst carrier, and
the amount of the third catalyst region supported is 10 g/L or more in terms of zeolite per L of the catalyst carrier.

4. The selective catalytic reduction system for exhaust gas treatment according to claim 1,
wherein when the total length of the first catalyst region, the second catalyst region and the third catalyst region supported is defined as 100, ratios of the lengths of the catalyst regions supported satisfy the following relationship:
the length of the first catalyst region supported is 5 to 40,
the length of the second catalyst region supported is 5 to 40, and
the length of the third catalyst region supported is 50 to 90.

5. The selective catalytic reduction system for exhaust gas treatment according to claim 1,
wherein the catalyst carrier comprises a first catalyst carrier, and
the first catalyst region, the second catalyst region and the third catalyst region are provided on the first catalyst carrier.

6. The selective catalytic reduction system for exhaust gas treatment according to claim 1,
wherein the catalyst carrier comprises a first catalyst carrier and a second catalyst carrier,
the first catalyst region and the second catalyst region are provided on the first catalyst carrier, and
the third catalyst region is provided on the second catalyst carrier.

7. The selective catalytic reduction system for exhaust gas treatment according to claim 1,
wherein the catalyst carrier comprises a first catalyst carrier and a second catalyst carrier,
the first catalyst region is provided on the first catalyst carrier, and
the second catalyst region and the third catalyst region are provided on the second catalyst carrier.

8. The selective catalytic reduction system for exhaust gas treatment according to claim 1,
wherein the catalyst carrier comprises a first catalyst carrier, a second catalyst carrier and a third catalyst carrier,
the first catalyst region is provided on the first catalyst carrier,
the second catalyst region is provided on the second catalyst carrier, and
the third catalyst region is provided on the third catalyst carrier.

9. The selective catalytic reduction system for exhaust gas treatment according to claim 1,
wherein the catalyst carrier is a flow-through type honeycomb structure.

10. The selective catalytic reduction system for exhaust gas treatment according to claim 1,
wherein the exhaust gas flow channel is an exhaust gas flow channel of a diesel engine.

11. An exhaust gas purification apparatus for lean combustion engines, comprising at least:
one or more oxidation catalysts that are arranged in an exhaust gas flow channel and that oxidize at least one selected from the group consisting of CO, HC, NO and NH₃ in an exhaust gas discharged from a lean combustion engine;
a catalyst-coated particulate filter that is arranged in the exhaust gas flow channel and that collects particulate components in the exhaust gas, and combusts or oxidizes and removes the particulate components;
a reducing agent supplying unit that supplies one or more reducing agents selected from the group consisting of a urea component and an ammonia component into the exhaust gas flow channel; and
the selective catalytic reduction system for exhaust gas treatment according to any one of claims 1 to 10 that is arranged in the exhaust gas flow channel and that adsorbs ammonia and brings the ammonia into contact with NOₓ to perform reduction.
